# EUROPÄISCHE PATENTANMELDUNG

(11) **EP 4 183 618 A1**
(43) Veröffentlichungstag der Anmeldung: **24.05.2023**
(21) Anmeldenummer: 22169112.4
(22) Anmeldetag: 20.04.2022
(51) Int. Cl.: B60L 53/30, B60L 53/31, B60L 53/66

(54) **STROMLADESÄULE FÜR ELEKTROFAHRZEUGE**

(30) Priorität: 18.11.2021 DE 102021130168
(71) Anmelder: Feig Electronic GmbH, 35781 Weilburg (DE)
(72) Erfinder: Haertle, Manuel, 35781 Weilburg (DE); Berlips, Carsten, 35781 Weilburg (DE); Desch, Markus, 35781 Weilburg (DE); Keller, Rafael, 35781 Weilburg (DE)
(74) Vertreter: Knefel, Cordula

(57) **Zusammenfassung**

Die Erfindung betrifft eine Stromladesäule für Elektrofahrzeuge, wobei die Stromladesäule ein Touchpanel, ein Payment-Terminal, einen Ladecontroller und einen Zähler aufweist,
- bei der der Ladecontroller und das Touchpanel in dem Payment-Terminal angeordnet sind,
- bei der das Touchpanel, das Payment-Terminal und der Ladecontroller einen gemeinsamen Mikroprozessor aufweisen,
- bei der das Payment-Terminal mit dem Ladecontroller und dem Touchpanel als ein durch einen öffentlich zugänglichen Prüfstandard geprüftes Payment-Terminal ausgebildet ist. (Fig. 3).

## Beschreibung

Die Erfindung betrifft eine Stromladesäule für Elektrofahrzeuge.

Stromladesäulen beziehen sich auf Einrichtungen zum Aufladen von Elektrofahrzeugen. Die Stromladesäule dient zum Laden eines Stromspeichers eines Elektrofahrzeuges, wie zum Beispiel eines Kraftfahrzeuges. Das Elektrofahrzeug kann beispielsweise ein Fahrrad, das einen elektrischen Motor umfasst, sein. Das Fahrrad kann als so genanntes Pedelec ausgestaltet sein. Alternativ hierzu ist das Elektrofahrzeug beispielsweise ein elektrisch angetriebener Roller oder ein elektrisch angetriebenes Motorrad. Besonders bevorzugt ist jedoch das Elektrofahrzeug ein elektrisch betriebenes Kraftfahrzeug, insbesondere ein Personenkraftwagen. Dieses Kraftfahrzeug weist zweckmäßigerweise einen Elektromotor auf, der in Wirkverbindung mit Rädern des Kraftfahrzeuges ist. Hierbei bildet der Elektromotor zumindest teilweise einen Hauptantrieb des Kraftfahrzeuges.

Es können neben Personenkraftwagen jedoch auch LKWs, Busse oder dergleichen an der Stromladesäule aufgeladen werden.

Der an der Stromladesäule geladene Strom wird von dem Anwender bezahlt. Hierzu weist die Stromladesäule ein Payment-Terminal zum Beispiel für Kreditkarten, Debitkarten, Karten geschlossener Zahlungssysteme oder zur Bezahlung beispielsweise mittels eines Smartphones auf.

Bei Karten für bargeldlose Zahlungssysteme unterscheidet man grundsätzlich Karten für offene Zahlungssysteme und für geschlossene Zahlungssysteme.

In einem offenen Zahlungssystem werden die bargeldlosen Zahlungen (Transaktionen) vom internationalen Hintergrundsystem zur Abwicklung von Transaktionen verarbeitet. Karten tragen das Logo eines Zahlungsdienstleisters wie zum Beispiel MasterCard (eingetragene Marke der MasterCard International Inc. Corporated, USA), American Express (eingetragene Marke der American Express Marketing and Development Corp., USA), Discover (eingetragene Marke der Discover Financial Services, USA), Visa (eingetragene Marke der Visa International Service Association, Forster City, Kalifornien, USA) usw.. Diese Karten können an einer Vielzahl von Akzeptanzstellen für bargeldlose Zahlungen verwendet werden. Um den Missbrauch von Kartendaten zu vermeiden, müssen alle Systemkomponenten zur Abwicklung von Transaktionen nach definierten Standards zugelassen werden. Payment-Terminals müssen insbesondere sicherstellen, dass keine sensitiven Daten der Karten, wie Zahlungskartennummern (Primary Account Number-PAN) oder persönliche Identifikationsnummern (PIN) das Terminal im Klartext verlassen. Darüber hinaus müssen sämtliche kryptographischen Schlüssel geschützt werden, die für die sichere Kommunikation des Payment-Terminals mit einem Hintergrundsystem erforderlich sind.

Neben den oben genannten internationalen Karten gibt es beispielsweise auch nationale Karten von offenen Zahlungssystemen wie zum Beispiel Girocard (eingetragene Marke der EURO Kartensysteme GmbH, Deutschland).

Bei geschlossenen Zahlungssystemen ist die Zahlungsabwicklung innerhalb eines geschlossenen Verbundes möglich. Die Akzeptanz von Karten eines geschlossenen Zahlungssystemes ist auf die Mitglieder des Verbundes beschränkt. Die Sicherheitsanforderungen an dieses System werden von dem jeweiligen Betreiber festgelegt.

Aus der Praxis sind Stromladesäulen mit Payment-Terminals bekannt. Diese aus der Praxis bekannten Stromladesäulen weisen - wie schon ausgeführt - ein Payment-Terminal auf. Darüber hinaus ist als gesonderte Einheit in der Stromladesäule ein Ladecontroller vorgesehen, der mit einem so genannten Lade-Infrastruktur-Backend (LIS-Backend) oder so genannten CPO-Backend (Charge Point Operator) kommuniziert.

Diese aus der Praxis bekannten Stromladesäulen weisen darüber hinaus als gesonderte Baueinheit ein Display auf sowie als weitere gesonderte Baueinheit einen Zähler, beispielsweise einen Zähler mit einem elektronischen Messwerk.

Diese einzelnen Komponenten stellen eigene Einheiten dar, die mittels Kabel miteinander verbunden werden. Der Nachteil liegt dabei zum einen in dem aufwendigen mechanischen Aufbau innerhalb der Stromladesäule. Zum anderen liegt der Nachteil darin, dass das Payment-Terminal, der Ladecontroller und der Zähler jeweils einen eigenen Schutz gegen kriminelle Angriffe von außen benötigen.

Ein zugelassenes Payment-Terminal benötigt zum Beispiel eine PCI PTS-Zertifizierung, welche Bestandteil einer PCI DSS-Zertifizierung ist. Bei der PCI DSS-Zertifizierung handelt es sich um ein Programm von Visa, MasterCard und anderen Kartenanbietern, das den geschützten Umgang mit Zahlungsdaten sicherstellen soll.

PCI DSS (Payment Card Industry Data Security Standard) soll dem Abgreifen von Karteninhaberdaten und deren missbräuchlicher Verwendung durch unbefugte Dritte vorbeugen. Aus diesem Grunde geben Visa und MasterCard vor, dass Kreditkartenzahlungen nur mit PCI DSS-zertifizierten Zahlungssystemen abgewickelt werden. Die Richtlinien für diese PCI DSS-Zertifizierung werden üblicherweise jährlich geprüft und erneuert. PCI PTS bedeutet Payment Card Industry Pin Transaction Security. PCI PTS beschreibt die sichere Hardware und Software eines PIN-Eingabe-Terminals, die für die PIN-Eingabe und die sichere Datenverarbeitung zuständig ist.

Auch zum Beispiel American Express, Discover und JCB (Japan Credit Bureau) (eingetragene Marke der JCB Co., Ltd.), China UnionPay, RuPay (eingetragene Marke der NATIONAL PAYMENTS CORPORATION OF INDIA), Australian Payments Network, PURE oder Bancomat (eingetragene Marke der BANCOMAT S.p.A.) verlangen, dass die PCI DSS-Standards eingehalten werden.

Bei einer PCI PTS-Zertifizierung werden Angriffe auf Hard- und Software des Payment-Terminals simuliert. Durch den simulierten Angriff darf es einem Angreifer zum Beispiel nicht möglich sein, an die Kryptographie-Schlüssel im Gerät zu gelangen. Der Aufwand für den Schutz der Hardware ist dabei sehr hoch und beinhaltet zum Beispiel so genannte Mesh-Strukturen zum Schutz der Prozessor- und Kryptographie-Einheit des Gerätes.

Auch der Ladecontroller und der Zähler müssen gegenüber möglichen kriminellen Beeinflussungen von außen geschützt werden, um zum Beispiel eine Manipulation von Messwerten zu verhindern.

Häufig weisen die aus der Praxis bekannten Stromladesäulen zusätzlich noch ein Touchpanel auf. Ist ein Touchpanel vorgesehen, ist es erforderlich, ein Zusatzboard mit Elektronik anzuordnen, um das Touchpanel anzusteuern. Ist lediglich ein Display vorgesehen, ist ebenfalls ein Zusatzboard mit der entsprechenden Elektronik notwendig.

Wie schon ausgeführt, weisen die aus der Praxis bekannten Stromladesäulen den Nachteil auf, dass die einzelnen Komponenten wie Payment-Terminal, Ladecontroller und Touchpanel aus einzelnen Komponenten bestehen, die aufwendig durch Kabel miteinander verbunden werden müssen.

Darüber hinaus muss jede einzelne Komponente eine Sicherheitszertifizierung erhalten, das heißt für das Payment-Terminal ist eine Zertifizierung, beispielsweise nach dem PCI PTS-Standard erforderlich. Für den Ladecontroller und das Touchpanel müssen jeweils eigene Zertifizierungen vorgenommen werden. Hierdurch wird der Aufwand vor Inbetriebnahme einer Stromladesäule mit den verschiedenen Komponenten sehr aufwendig, wodurch die Kosten der Stromladesäule sich erheblich erhöhen.

Das der Erfindung zugrundeliegende technische Problem besteht darin, eine Stromladesäule für Elektrofahrzeuge anzugeben, welches einfacher hergestellt werden kann und welches so aufgebaut ist, dass der Aufwand für Zertifizierungen verringert ist.

Dieses technische Problem wird durch eine Stromladesäule für Elektrofahrzeuge mit den Merkmalen gemäß Anspruch 1 gelöst.

Die erfindungsgemäße Stromladesäule für Elektrofahrzeuge, wobei die Stromladesäule ein Touchpanel, ein Payment-Terminal, einen Ladecontroller und einen Zähler aufweist, zeichnet sich dadurch aus,
- dass der Ladecontroller und das Touchpanel in dem Payment-Terminal angeordnet sind,
- dass das Touchpanel, das Payment-Terminal und der Ladecontroller einen gemeinsamen Microprozessor aufweisen,
- und dass das Payment-Terminal mit dem Ladecontroller und dem Touchpanel als ein durch einen öffentlich zugänglichen Prüfstandard geprüftes Payment-Terminal ausgebildet ist.

Das Touchpanel dient der Kommunikation mit dem Anwender.

Der Ladecontroller steuert die Abläufe der Stromladesäule und den Stromladevorgang. Der Ladecontroller kommuniziert beispielsweise mit einem Lade-Infrastruktur-Backend, dem Zähler (Stromzähler), dem Touchpanel und dem Payment-Terminal.

Der Zähler ist als Stromzähler ausgebildet. Der Zähler misst die abgegebene elektrische Leistung beim Stromladevorgang. Vorteilhaft weist der Zähler eine integrierte Signatureinheit auf. Es ist auch möglich, die Signatureinheit gesondert vorzusehen. Der Zähler gibt zum Beispiel die Zählerstände vor und nach einem Stromladevorgang an den Ladecontroller weiter.

Das Payment-Terminal ist mit einem Payment-Backend verbunden. Mit dem Payment-Terminal ist der Bezahlvorgang durchführbar.

Die erfindungsgemäße Stromladesäule für Elektrofahrzeuge weist den Vorteil auf, dass der Ladecontroller und das Touchpanel in dem Payment-Terminal angeordnet sind. Durch die Anordnung des Ladecontrollers und des Touchpanels in dem Payment-Terminal ist es nicht erforderlich, die einzelnen Komponenten mittels Kabel miteinander zu verbinden.

Darüber hinaus weisen das Touch-Panel, das Payment-Terminal und der Ladecontroller einen gemeinsamen Mikroprozessor auf. Hierdurch werden elektronische Bauteile gespart, wodurch die erfindungsgemäße Stromladesäule preiswerter wird. Darüber hinaus werden diese drei Komponenten von dem gemeinsamen Mikroprozessor gesteuert. Durch die gemeinsame Steuerung durch den gemeinsamen Mikroprozessor vereinfacht sich der Aufbau und die Ansteuerung der erfindungsgemäßen Stromladesäule.

Der Mikroprozessor weist ein Betriebssystem auf. Das Betriebssystem kann vorteilhaft verschiedene Aufgaben durchführen.

Eine Aufgabe des Mikroprozessors ist vorteilhaft die Abwicklung des Bezahlvorganges. Hierzu gehören beispielsweise eine Vorautorisierung und/oder eine Angabe des tatsächlichen Preises und/oder eine PIN-Eingabe und/oder eines Abschlusses der Transaktion.

Eine weitere Aufgabe des Mikroprozessors ist vorteilhaft die Überwachung des Stromladevorganges. Der Stromladevorgang besteht vorteilhaft aus Sicherheitsmessungen und/oder der Freigabe des Ladevorganges und/oder der Begrenzung der Ladeleistung und/oder der Anzeige der Ladedaten am Touchpanel und/oder des Abschlusses des Ladevorganges (zum Beispiel der Entriegelung des Steckers) und/oder die Ausbildung des Datensatzes, der den Messvorgang beinhaltet.

Der Datensatz kann den Start- und Endwert des Zählers aufweisen sowie das Datum und die Uhrzeit. Es können auch weitere Werte vorhanden sein in dem Datensatz.

Darüber hinaus ist das Payment-Terminal mit dem Ladecontroller und dem Touchpanel als ein durch einen öffentlich zugänglichen Prüfstandard geprüftes Payment-Terminal ausgebildet.

Das Payment-Terminal muss durch einen öffentlich zugänglichen Prüfstandard geprüft sein, damit Bezahlvorgänge mit dem Payment-Terminal durchgeführt werden können.

Wie schon zum Stand der Technik ausgeführt, ist ein gängiger Prüfstandard beispielsweise der PCI PTS-Standard. Wird das Payment-Terminal dieser PCI PTS-Prüfung unterzogen und das Payment-Terminal wird zertifiziert, sind die Sicherheitsanforderungen für eine Zertifizierung des Ladecontrollers und des Touchpanels erfüllt.

Unter Sicherheitsanforderungen werden sogenannte "Security-Anforderungen" verstanden. Diese sind zum Beispiel die Anforderungen an die Datensicherheit.

Sogenannte "Safety-Anforderungen", unter denen zum Beispiel die elektrische Sicherheit oder ein Brandschutz zu verstehen ist, ist mit Sicherheitsanforderungen im vorliegenden Fall nicht gemeint. Diese "Safety-Anforderungen" gehören auch nicht zu den beschriebenen Prüfstandards.

Durch die oben beschriebene Prüfung des Payment-Terminals verringert sich der Aufwand für die Zertifizierung der erfindungsgemäßen Stromladesäule erheblich.

Durch die Integration des Ladecontrollers in das Payment-Terminal weist die erfindungsgemäße Stromladesäule den Vorteil auf, dass der Ladecontroller durch die Prüfung des Payment-Terminals den Prüfstandard des Payment-Terminals mit erfüllt. Das Gleiche gilt für das Touchpanel. Da das Payment-Terminal gegenüber kriminellen Angriffen durch einen öffentlich zugänglichen Prüfungsstandard geprüft ist, beispielsweise durch PCI PTS oder durch einen länderspezifischen Prüfstandard wie zum Beispiel Common.SECC Rule Book (deutscher Prüfstandard), ist damit auch gleichzeitig der integrierte Ladecontroller und das integrierte Touchpanel gegenüber solchen Angriffen geprüft. Damit erfolgt die Zertifizierung des Payment-Terminals mit dem integrierten Ladecontroller und dem integrierten Touchpanel in besonders einfacher Art und Weise.

Der Datensatz ist gemäß einer besonders bevorzugten Ausführungsform als ein unveränderbarer und eindeutiger Datensatz ausgebildet.

Unveränderbarer Datensatz bedeutet, dass eine Prüfsumme des Datensatzes über einen Public Key derart geprüft werden kann, dass die Prüfsumme unverändert ist.

Eindeutiger Datensatz bedeutet, dass der Datensatz einem bestimmten Zähler oder einer bestimmten Stromladesäule zugeordnet werden kann.

Neben dem Mikroprozessor können weitere Logikschaltungen für Einzelaufgaben vorhanden sein.

Gemäß einer vorteilhaften Ausführungsform sind der Ladecontroller und das Touchpanel und das Payment-Terminal als eine bauliche Einheit ausgebildet.

Durch diesen kompakten Aufbau reduziert sich der erhebliche Montage- und Verkabelungsaufwand, wie er bei den aus der Praxis bekannten Stromladesäulen erforderlich ist, erheblich.

Gemäß einer besonders bevorzugten Ausführungsform der Erfindung ist vorgesehen, dass der Ladecontroller und das Touchpanel und das Payment-Terminal als eine gemeinsame Elektronikeinheit ausgebildet sind. Durch diese Ausführungsform wird der erhebliche Montage- und Verkabelungsaufwand bei den aus der Praxis bekannten Stromladesäulen auf ein Minimum reduziert.

Gemäß einer weiteren vorteilhaften Ausführungsform der Erfindung ist das Payment-Terminal mit dem Ladecontroller und dem Touch-Panel als ein nach PCI PTS- (Payment Card Industry PIN Transaction Security) oder einem länderspezifischen Standard geprüftes und zertifiziertes Payment-Terminal mit dem Ladecontroller und dem Touchpanel ausgebildet.

Die erfindungsgemäße Stromladesäule weist vorteilhaft ein Payment-Terminal auf, welches den spezifischen Anforderungen der internationalen Hintergrundsysteme zur Abwicklung von Transaktionen entspricht. Hierzu kann das Payment-Terminal als ein nach dem PCI PTS-Standard geprüftes und zertifiziertes Payment-Terminal ausgebildet sein, wobei gleichzeitig der integrierte Ladecontroller und das integrierte Touchpanel ebenfalls nach diesem Standard geprüft und zertifiziert sind.

Es besteht auch die Möglichkeit, dass das Payment-Terminal mit dem integrierten Ladecontroller und dem Touchpanel nach einem länderspezifischen Standard, beispielsweise Common.SECC Rule Book geprüft und zertifiziert ist.

Dies hängt von dem Land ab, in dem die erfindungsgemäße Stromladesäule eingesetzt wird, und davon, welche Karten eines Zahlungssystems verwendet werden.

Gemäß einer vorteilhaften Ausführungsform der Erfindung weist die Stromladesäule eine Zählersignatureinheit auf.

Die Zählersignatureinheit dient ebenfalls dazu, dass die Stromladesäule nicht manipuliert werden kann hinsichtlich des Zählers.

Gemäß einer weiteren vorteilhaften Ausführungsform der Erfindung ist vorgesehen, dass der Zähler in dem Payment-Terminal angeordnet ist.

Der Zähler ist vorteilhaft wie auch das Touchpanel und der Ladecontroller in dem Payment-Terminal integriert. Diese Ausführungsform weist den Vorteil auf, dass mit der Prüfung und Zertifizierung des Payment-Terminals auch gleichzeitig der Zähler geprüft und zertifiziert werden kann. Darüber hinaus wird hierdurch wiederum der Verkabelungsaufwand minimiert.

Gemäß einer weiteren vorteilhaften Ausführungsform ist die Zählersignatureinheit in dem Payment-Terminal angeordnet.

Diese Ausführungsform weist den Vorteil auf, dass die Stromladesäule einen sehr kompakten Aufbau mit dem Payment-Terminal, dem Ladecontroller, dem Touchpanel, dem Zähler und der Zählersignatureinheit aufweist.

Je geringer der Verkabelungsaufwand zwischen einzelnen Komponenten ist, um so preiswerter lässt sich die erfindungsgemäße Stromladesäule herstellen.

Bei einem geringeren Verkabelungsaufwand ist auch die Angriffssicherheit in Bezug auf die Hardware erhöht, da nur noch eine kompakte Einheit, beispielsweise eine kompakte Elektronikeinheit geschützt werden muss.

Gemäß einer besonders bevorzugten Ausführungsform der Erfindung ist die Zählersignatureinheit in der Elektronikeinheit angeordnet.

Wie schon ausgeführt, wird hierdurch eine kompakte Elektronikeinheit aus Ladecontroller, Touchpanel, Payment-Terminal sowie der Zählersignatureinheit erhalten, wodurch der Aufbau der Stromladesäule erheblich vereinfacht wird. Zusätzlich kann der Zähler in der Elektronikeinheit angeordnet sein.

Gemäß einer weiteren vorteilhaften Ausführungsform der Erfindung weist die Stromladesäule einen RFID-Reader auf.

Mit dem RFID-Reader (RFID - englisch für "Radio Frequency Identification") kann eine Identifizierung von Karten mit integriertem RFID-Transponder erfolgen. Mit dem RFID-Reader können somit Karten, beispielsweise eines geschlossenen Zahlungssystems gelesen und/oder beschrieben werden.

Transponder werden in RFID-Funksystemen (Radio Frequency Identification) verwendet, nämlich in Niedrigfrequenzfunksystemen (LF-Funksystemen) oder in Hochfrequenzfunksystemen (HF-Funksystemen) oder in Ultrahochfrequenzfunksystemen (UHF-Funksystemen). Die LF-Systeme arbeiten in Frequenzbändern von 9 kHz bis 135 kHz. Die HF-Systeme arbeiten unter anderem bei 13,56 MHz und die UHF-Systeme arbeiten zum Beispiel in Frequenzbändern von 865 bis 870 MHz oder 902 bis 928 MHz.

In dem RFID-Reader werden RFID-Antennensysteme eingesetzt, die zur kontaktlosen Datenübertragung, insbesondere zum Lesen oder Beschreiben von kontaktlosen Datenträgern, sogenannten Transpondern, dienen. Im HF-Bereich besteht ein RFID-Antennensystem üblicherweise aus einer RFID-Antenne, die wenigstens eine Antennenschleife aufweist, die eine Induktivität darstellt, und aus einer oder mehreren Windungen gebildet wird, die darüber hinaus eine Anpassschaltung aufweist, eine Schreib-/Lesestation (Reader) mit integrierter Sender-/Empfänger- und Steuereinheit und einer Verbindungsleitung zwischen der Schreib-/Lesestation und der RFID-Antenne. Der RFID-Reader kann auch lediglich eine Lesestation mit integriertem Empfänger aufweisen.

Die RFID-Antenne eines RFID-Systems hat folgende Aufgaben: Einerseits die Übertragung von Energie an den Transponder und andererseits die Übertragung von Daten an und vom Transponder. Die Energie- und Datenübertragung basiert im HF-Bereich auf der magnetischen Kopplung der Wechselfelder des Readers und des Transponders im Nahbereich.

Gemäß einer weiteren vorteilhaften Ausführungsform der Erfindung ist vorgesehen, dass die Stromladesäule ein Werbedisplay aufweist.

Über das Werbedisplay kann Werbung angezeigt werden, beispielsweise dauerhaft oder während eines Ladevorganges.

Durch die Anordnung eines Werbedisplays kann die erfindungsgemäße Stromladesäule als Werbeträger dienen.

Gemäß einer weiteren vorteilhaften Ausführungsform der Erfindung kann das Touchpanel als Werbedisplay ausgebildet sein.

Ist das Touchpanel als Werbedisplay ausgebildet, muss sichergestellt sein, dass der Inhalt der Werbung auf sicherheitstechnische Merkmale geprüft ist und nach einer Freigabe nicht veränderbar ist.

Eine weitere vorteilhafte Ausführungsform der Erfindung sieht vor, dass die Stromladesäule eine Vorrichtung zur Aufzeichnung von Daten und/oder einen Speicher und/oder eine Echtzeituhr aufweist.

Die Vorrichtung zur Aufzeichnung von Daten zeichnet beispielsweise intern Ladevorgänge, die Anzahl der Ladevorgänge, die Dauer von Ladevorgängen und den Verbrauch, Datum und Uhrzeit und dergleichen auf.

Darüber hinaus kann die Stromladesäule einen Datenspeicher aufweisen.

Es ist jedoch auch möglich, Daten und Informationen in einer Cloud zu speichern.

Weiterhin weist die erfindungsgemäße Stromladesäule vorteilhaft eine Echtzeituhr auf. Diese Echtzeituhr soll unveränderbar sein. Das heißt, die Uhr darf nicht manipulierbar sein, damit eine korrekte Dokumentation von Daten und Informationen mit korrekter Zuordnung der Zeit möglich ist.

Gemäß einer weiteren vorteilhaften Ausführungsform der Erfindung ist ein Hardwarebeschleuniger vorgesehen. Durch den Hardwarebeschleuniger ist eine Infrastruktur der Stromladesäule schneller. Es können beispielsweise eine Verschlüsselungsfunktion und/oder eine Hash-Funktion und/oder ein Public Key mit einer Hardwarebeschleunigung versehen sein.

Vorteilhaft ist die Hardwarebeschleunigung bei der Bildung einer so genannten Messkapsel, bei der die relevanten Daten kryptographisch verrechnet werden. In der Messkapsel erfolgt die kryptographische Verrechnung bevorzugt in der Hardware in einem kryptographischen Coprozessor. Dieser kann die Sicherheitsfunktionen optimal ausnutzen und hat einen deutlichen Geschwindigkeitsvorteil gegenüber einer Softwarelösung.

Die Messkapsel bildet eine Einheit aus sicherer Hardware und sicherer Software, die alle relevanten Daten zu einem Datenpaket zusammenstellen kann, welches kryptographisch abgesichert ist.

Gemäß einer weiteren vorteilhaften Ausführungsform der Erfindung ist zwischen dem Zähler und der Zählersignatureinheit eine gesicherte Verbindung ausgebildet.

Sind Zähler und Zählersignatureinheit nicht gemeinsam in dem Payment-Terminal angeordnet, sondern Zähler und/oder Zählersignatureinheit sind als eigenständige Komponenten ausgebildet, ist vorteilhaft eine gesicherte Verbindung zwischen diesen beiden Komponenten vorgesehen, um eine gesicherte Übertragung der Daten wie zum Beispiel einem Paar aus einem Public Key und einem Private Key zu gewährleisten.

Vorteilhaft werden bei einem Stromladevorgang Daten der Karte des offenen oder geschlossenen Zahlungssystems an ein Backend-Gerät gesendet zur Überprüfung, ob die Karte gültig ist, damit ein Stromladevorgang gestartet werden kann.

Gemäß einer weiteren vorteilhaften Ausführungsform der Erfindung ist vorgesehen, dass der Ladecontroller eichrechtskonform ausgebildet ist. Der Ladecontroller gewährt damit eine eichrechtskonforme Datenübermittelung.

Gemäß einer weiteren vorteilhaften Ausführungsform der Erfindung ist der Zähler nach dem Eichrecht geprüft. Das heißt, der Zähler ist eichrechtskonform.

Vorteilhaft weist der Zähler eine kryptographisch gesicherte Kommunikationsschnittstelle auf. Diese Kommunikationsschnittstelle dient zum sicheren Austausch der relevanten Messdaten. Um bei dem Gesamtsystem bei einem Austausch einer Komponente, z.B. des Zählers, weiterhin die Zertifizierung aufrechtzuerhalten, kann ein kryptographisch gesicherter Zähler einfach ausgetauscht werden, da die Überprüfung der Kommunikation durch den Ladecontroller durchführbar ist.

Das Touchpanel ist vorteilhaft derart ausgebildet, dass eine PIN-Eingabe möglich ist. Das Touchpanel weist vorteilhaft ein PIN-Eingabefeld auf.

Vorteilhaft weist die erfindungsgemäße Stromladesäule einen Zähler mit digitaler Signatur auf. Hierzu ist vorteilhaft ein unveränderbares Paar bestehend aus Public Key und Private Key vorgesehen.

Der Public Key ist unveränderbar. Der Public Key kann auf dem Display darstellbar und ablesbar sein.

Eine Anzeige von Zählerdaten ist ebenfalls vorteilhaft unveränderbar.

Eine Überprüfung des Zählers ist vorteilhaft möglich. Eine Kalibrierung der Stromladesäule wird in regelmäßigen Abständen durchgeführt oder wird erforderlich, falls der Zähler falsche Daten anzeigt. Um die Kalibrierung der Stromladesäule zu erhalten, kann auch der Zähler ausgetauscht werden.

Bei der erfindungsgemäßen Stromladesäule ist ein Austausch des Zählers möglich, da der Mikroprozessor in der Lage ist, einen für die Stromladesäule validen Stromzähler zu verifizieren.

Bei Austausch des Zählers ist die Zertifizierung des Payment-Terminals nicht betroffen.

Ein Betreiber der Stromladesäule (Charge Point Operator (CPO)) bildet einen so genannten CPO-Backend.

Das CPO-Backend weist vorteilhaft einen ungesicherten Server und einen gesicherten Server auf.

Zwischen der Stromladesäule und dem Charge Point Operator ist gemäß einer besonders bevorzugten Ausführungsform ein nicht manipulierbarer Datenaustausch vorhanden. Insbesondere werden die Daten aus dem Zähler, die mit einer Signatur der Zählersignatureinheit versehen sind, versendet.

Vorteilhaft erfolgt eine Abrechnung über einen Stromladevorgang mit sämtlichen der folgenden Daten oder einer Auswahl der folgenden Daten:
- Start-/Stoppzeit,
- eindeutige ID-Transaktion,
- Endkunden-ID (ID - Identifikation),
- Ort des Ladens,
- Tarif,
- Kosten,
- Kilowattstunden (kWh).

Die Abrechnungen können vorteilhaft gespeichert werden, lokal oder auf einen Server. Die Rechnungen werden vorteilhaft mit Signatur gespeichert.

Die Rechnung muss für den Kunden überprüfbar sein. Hierzu ist vorteilhaft eine Transparenzsoftware vorgesehen. Die Daten für die Transparenzsoftware sind vorteilhaft anpassbar, wenn zum Beispiel ein neuer Anbieter auf den Markt kommt.

Vorteilhaft können die signierten Daten lokal gespeichert werden. Es ist auch möglich, die signierten Daten in einer Cloud zu speichern. Eine Kombination von lokaler Speicherung und Speicherung in einer Cloud ist ebenfalls möglich.

Grundsätzlich können die Daten von einem Kunden in einer Applikation (App) auf einem Smartphone oder einem anderen digitalen Gerät abgerufen werden. Die Daten der Stromladesäule werden jedoch auf keinen Fall verändert. Die Daten werden lediglich in einer App eingelesen, sind jedoch nicht von der App veränderbar.

Die erfindungsgemäße Stromladesäule weist den Vorteil auf, dass RFID-Karten von geschlossenen Zahlungssystemen und offenen Zahlungssystemen verwendet werden können, ohne dass die Zulassung des Payment-Terminals oder der Stromladesäule beeinflusst ist.

Die Zählersignatureinheit ist vorteilhaft im Mikroprozessor implementiert. Vorteilhaft ist damit die Sicherheit der Hardware und die Datensicherheit der Software sowie die Auswahl der relevanten Daten und der kryptographischen Operationen über diese Daten gewährleistet.

Die Vorteile gegenüber den aus der Praxis bekannten Stromladesäulen sind:
- schnelle kryptographische Verfahren für digitale Signaturen (Hardewarebeschleunigung),
- unveränderbare Uhrzeit,
- sicherer Abruf kryptographisch gesicherter Daten vom Zähler, unabhängig vom verwendeten System ist möglich,
- Anzeige der relevanten unveränderbaren Daten auf dem geschützten Touchpanel (Zeit, Zählerstand, IDs, Public Key),
- ein Austausch eines Zählers ohne Neu-Zertifizierung ist möglich,
- ist die Zählersignatureinheit außerhalb des Zählers angeordnet, besteht der Vorteil, dass nur der Zähler ausgetauscht werden kann,
- bei Austausch des Zählers kann der Mikroprozessor den neuen Zähler als gültig validieren,
- Hardwarebeschleunigung durch einen kryptographischen Coprozessor,
- flexible Zusammenstellung der Daten in der Zählersignatureinheit, mehrfache Ausstellung der Daten in der Zählersignatureinheit,
- flexible Aufbereitung der Daten für unterschiedliche Transparenzsoftwareausführungen,
- aufgrund des Betriebssystems ist eine Bereitstellung der Daten sowohl Remote als auch lokal oder beides möglich,
- Erweiterungen durch ein App-System des Payment-Terminals sind möglich, ohne die Zulassung zu verlieren (Trennung zulassungsrelevanter Teile zum App-System).

Die erfindungsgemäße Stromladesäule weist darüber hinaus vorteilhaft Vorrichtungen zum Kommunizieren mit den verschiedenen Backends, beispielsweise dem Payment-Backend oder dem Ladeinfrastruktur-Backend auf. Es kann sich hierbei beispielsweise um Funkvorrichtungen oder dergleichen handeln.

Weitere Merkmale und Vorteile der Erfindung ergeben sich anhand der zugehörigen Zeichnungen, in denen mehrere Ausführungsbeispiele der erfindungsgemäßen Stromladesäule dargestellt sind, ohne die Erfindung auf diese Ausführungsbeispiele zu beschränken. In den Zeichnungen zeigen:
- Fig. 1: eine zum Stand der Technik gehörende Stromladesäule mit Display;
- Fig. 2: eine schematische Darstellung der Komponenten einer zum Stand der Technik gehörenden Stromladesäule;
- Fig. 3: eine erfindungsgemäße Stromladesäule;
- Fig. 4: die Komponenten einer erfindungsgemäßen Stromladesäule einer ersten Ausführungsform in schematischer Darstellung;
- Fig. 5: die Komponenten einer erfindungsgemäßen Stromladesäule einer zweiten Ausführungsform in schematischer Darstellung;
- Fig. 6: die Komponenten einer erfindungsgemäßen Stromladesäule eines dritten Ausführungsbeispiels in schematischer Darstellung;
- Fig. 7: eine schematische Darstellung eines Stromladevorganges eines Elektrofahrzeuges;
- Fig. 8: eine schematische Darstellung eines Bezahlvorganges in schematischer Darstellung.

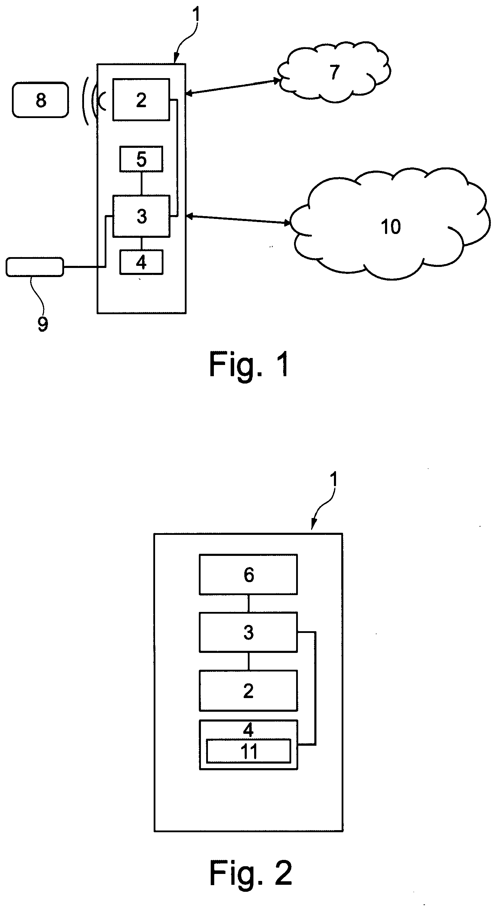

Fig. 1 zeigt einen Aufbau einer aus der Praxis bekannten Stromladesäule für Elektrofahrzeuge.

Fig. 1 zeigt eine Stromladesäule 1. Die Stromladesäule 1 weist ein Payment-Terminal 2 auf, einen Ladecontroller 3, einen Zähler 4 sowie ein Display 5. Anstelle des Displays 5 kann ein Touchpanel 6 (in Fig. 2 dargestellt) vorgesehen sein.

Wie in Fig. 1 dargestellt, kommuniziert das Payment-Terminal 2 mit einem Payment-Backend 7. Hierzu weist das Payment-Terminal 2 entsprechende Vorrichtungen zur Übertragung der Daten auf. Diese Vorrichtungen, beispielsweise Funkvorrichtungen sind gemäß Fig. 1 nicht dargestellt.

Der Ladecontroller 3 kommuniziert mit dem Payment-Terminal 2. Das Payment-Terminal 2 erkennt eine Karte 8 eines geschlossenen Zahlungssystems. Die Karte 8 enthält beispielsweise einen RFID-Transponder.

Mit dem Ladecontroller 3 ist ein Ladekabel 9 verbunden. Über das Ladekabel 9 kann ein Anwender ein Elektrofahrzeug, beispielsweise ein Elektroauto, laden.

Das Display 5 oder das in Fig. 2 dargestellte Touchpanel 6 dient der Kommunikation mit dem Anwender. Der Ladecontroller 3 steuert die Abläufe in der Stromladesäule 1 und den Stromladevorgang. Dazu kommuniziert der Ladecontroller 3 mit einem Ladeinfrastruktur-Backend 10 (LIS Backend). Gleichermaßen kann eine Kommunikation mit einem Charge-Point-Operator (CPO Backend) erfolgen wie auch mit einem E-Mobility Service Provider (MSP Backend).

Der Ladecontroller 3 kommuniziert mit dem Payment-Terminal 2. In dem Payment-Terminal 2 ist ein Kartenleser für verschiedene Karten, beispielsweise die Karte 8, vorgesehen. Es erfolgt eine Meldung der Vorautorisierung sowie eine Meldung eines finalen Betrages zur Abrechnung. Darüber hinaus werden elektronische Belegdaten erzeugt.

Bei der Kommunikation des Ladecontrollers 3 mit den Backends 10 erfolgt eine Verarbeitung von Karten eines offenen oder geschlossenen Zahlungssystems. Es erfolgt ein Remotestart von Ladevorgängen aufgrund App-gesteuerter Transaktionen. Es erfolgt eine Abrechnung und eine eichrechtskonforme Datenübermittlung.

Der Ladecontroller 3 kommuniziert zur Steuerung der Abläufe in der Stromladesäule 1 und des Ladevorganges mit dem Ladeinfrastruktur-Backend 10, dem Zähler 4 (Stromzähler), dem Touchpanel oder dem Display 5 und dem Payment-Terminal 2. Gemäß Fig. 2 weist der Zähler 4 eine integrierte Signatureinheit 11 auf. Der Zähler 4 misst die abgegebene elektrische Leistung beim Stromladevorgang. Er gibt dazu zum Beispiel die Zählerstände vor und nach dem Stromladevorgang an den Ladecontroller 3 weiter.

Das Payment-Terminal 2 ist mit dem Payment-Backend 7 verbunden und ist für die Bezahlvorgänge zuständig.

Gemäß den zum Stand der Technik gehörenden Stromladesäulen 1, wie sie in den Fig. 1 und 2 dargestellt sind, sind die Komponenten Payment-Terminal 2, Ladecontroller 3, Display 5 oder Touchpanel 6 und Zähler 4 separate Einheiten, die mittels Kabel verbunden werden.

Der Nachteil liegt damit zum einen in dem aufwendigen mechanischen Aufbau innerhalb der Stromladesäule 1. Zum anderen liegt der Nachteil darin, dass das Payment-Terminal 2, der Ladecontroller 3 und der Zähler 4 jeweils eine eigene Prüfung bezüglich eines Standards gegen kriminelle Angriffe von außen benötigen. Ein zugelassenes Payment-Terminal 2 benötigt zum Beispiel eine PCI PTS-Zertifizierung, bei der Angriffe auf Hardware und Software simuliert werden. Durch den simulierten Angriff darf es einem Angreifer zum Beispiel nicht möglich sein, an Kryptographieschlüssel in der Stromladesäule 1 zu gelangen. Der Aufwand für den Schutz der Hardware ist dabei sehr hoch und beinhaltet zum Beispiel so genannte Mesh-Strukturen zum Schutz der Prozessor- und Kryptographieeinheit (nicht dargestellt) der Stromladesäule 1.

Auch der Ladecontroller 3 und der Zähler 4 müssen gegenüber möglichen kriminellen Beeinflussungen von außen geschützt werden, um zum Beispiel einen nicht autorisierten Stromladevorgang zu verhindern.

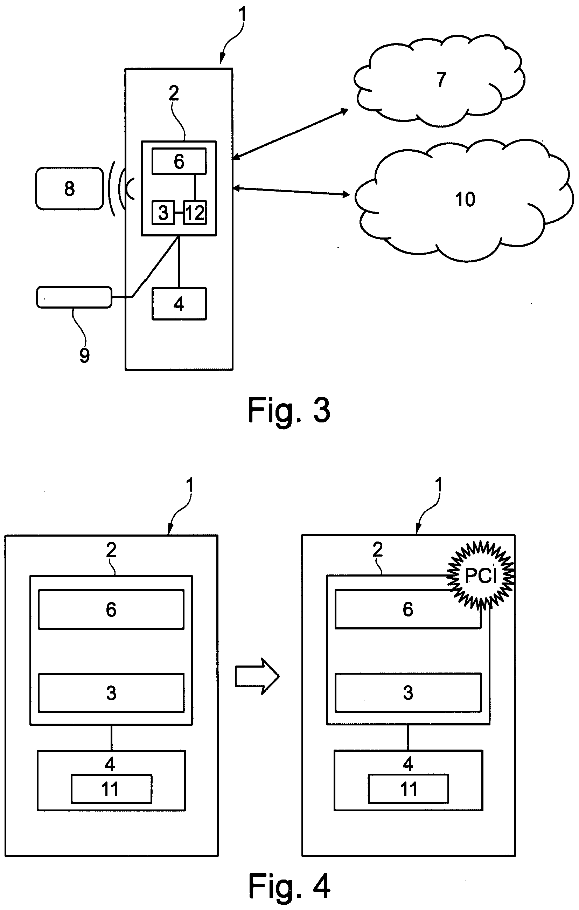

Die Fig. 3 bis 6 zeigen erfindungsgemäße Stromladesäulen 1.

Die in den Fig. 1 und 2 beschriebenen Komponenten sind bei den erfindungsgemäßen Stromladesäulen 1 gemäß den Fig. 3 bis 6 ebenfalls vorhanden und erfüllen dieselben Aufgaben, wie oben beschrieben. Gleiche Teile sind mit gleichen Bezugszeichen versehen.

Fig. 3 zeigt die Stromladesäule 1. Die Stromladesäule 1 weist das Payment-Terminal 2 auf. In dem Payment-Terminal 2 sind der Ladecontroller 3 und das Touchpanel 6 angeordnet.

Damit bilden das Payment-Terminal 2, der Ladecontroller 3 und das Touchpanel 6 eine bauliche Einheit. Das Payment-Terminal 2, der Ladecontroller 3 und das Touchpanel 6 bilden eine gemeinsame Elektronikeinheit.

Das Payment-Terminal 2 kommuniziert mit einer Karte 8, die beispielsweise einen RFID-Transponder aufweist. Das Payment-Terminal 2 kann mit Karten eines geschlossenen oder offenen Zahlungssystems kommunizieren.

In der Stromladesäule 1 ist darüber hinaus der Zähler 4 angeordnet. Zur Verbindung der Stromladesäule 1 mit einem Elektrofahrzeug ist das Ladekabel 9 vorgesehen.

In dem Payment-Terminal 2 ist ein Mikroprozessor 12 angeordnet. Der Mikroprozessor 12 (CPU - Central Processing Unit) ist ein gemeinsamer Mikroprozessor 12 für das Payment-Terminal 2, den Ladecontroller 3 sowie das Touchpanel 6.

Durch die Integration von Touchpanel 6, Payment-Terminal 2 und Ladecontroller 3 in eine kompakte Elektronikeinheit reduziert sich der gemäß dem Stand der Technik große Montage- und Verkabelungsaufwand auf ein Minimum.

Ein weiterer großer Vorteil durch die Integration des Ladecontrollers 3 und des Touchpanels 6 in das Payment-Terminal 2 ist die gleichzeitige Erfüllung der Anforderungen gegenüber kriminellen Angriffen der drei Einheiten, die für eine Zertifizierung erforderlich ist. Da das Payment-Terminal 2 gegenüber solchen Angriffen, beispielsweise durch PCI PTS geprüft und zertifiziert ist, sind weitere Prüfanforderungen anderer Prüfstandards für den integrierte Ladecontroller 3 mit erfüllt.

Gemäß Fig. 3 erfolgt eine Kommunikation des Payment-Terminals 2 mit dem Payment-Backend 7. Der Ladecontroller 3, der in dem Payment-Terminal 2 angeordnet ist, kommuniziert mit dem Ladeinfrastruktur-Backend 10. Die Elektronikeinheit, die das Payment-Terminal 2 und den Ladecontroller 3 sowie das Touchpanel 6 aufweist, kommuniziert auch mit dem Charge Point Operator-Backend und dem E-Mobility-Service-Provider-Backend.

Bei dieser Kommunikation erfolgt beispielsweise eine Verarbeitung von Karten eines geschlossenen oder offenen Zahlungssystems oder eine Verarbeitung von Roaming-Karten.

Es wird ein Remote-Start von Ladevorgängen durchgeführt. Es erfolgt eine Meldung einer Vorautorisierung. Beispielsweise kann auch eine Meldung des finalen Betrages zur Abrechnung erfolgen. Es können elektronische Belegdaten der Kartentransaktion übermittelt werden. Weiterhin kann eine Abrechnung und eine eichrechtskonforme Datenübermittlung erfolgen.

Für die Datenübermittlung weist die Stromladesäule 1 mindestens eine Vorrichtung zur Datenübermittlung auf, beispielsweise eine Sende- und Empfangsvorrichtung, zum Beispiel eine Funkvorrichtung. Die Stromladesäule 1 weist eine Vorrichtung zur Kommunikation mit dem Payment-Backend auf, beispielsweise Netzwerkverbindungen (Ethernet, Funk, Mobilfunk, USB) oder serielle Verbindungen.

Das Payment-Terminal 2 weist eine Vorrichtung zur Kommunikation mit den Karten 8 auf.

Die Karten 8 können Karten eines geschlossenen oder offenen Zahlungssystems sein. Aus diesem Grund ist wenigstens eine Vorrichtung zur Kommunikation, das heißt Datenübertragung mit diesen Karten vorgesehen.

Die Karten 8 können beispielsweise einen RFID-Transponder aufweisen. In diesem Fall weist das Payment-Terminal 2 beispielsweise ein RFID-Schreib-/Lesegerät auf.

Fig. 4 zeigt lediglich schematisch die wesentlichen Komponenten der Stromladesäule 1, nämlich das Touchpanel 6 und den Ladecontroller 3, die in dem Payment-Terminal 2 angeordnet sind. In der Stromladesäule 1 ist darüber hinaus der Zähler 4 angeordnet. Der Zähler 4 weist eine Signatureinheit 11 auf. Dieser Aufbau entspricht im wesentlichen dem Aufbau gemäß Fig. 3. Wie in Fig. 4 dargestellt ist, erfolgt eine Prüfung und Zertifizierung des Payment-Terminals 2 mit dem in dem Payment-Terminal 2 angeordneten Ladecontroller 3 und dem Touchpanel 6. Gemäß Fig. 4 ist eine PCI PTS-Prüfung vorgesehen. Durch diese Prüfung des Payment-Terminals 2 erfüllen auch gleichzeitig der Ladecontroller 3 und das Touchpanel 6 die Zertifizierungsanforderungen, die an den Ladecontroller 3 und das Touchpanel 6 gestellt werden.

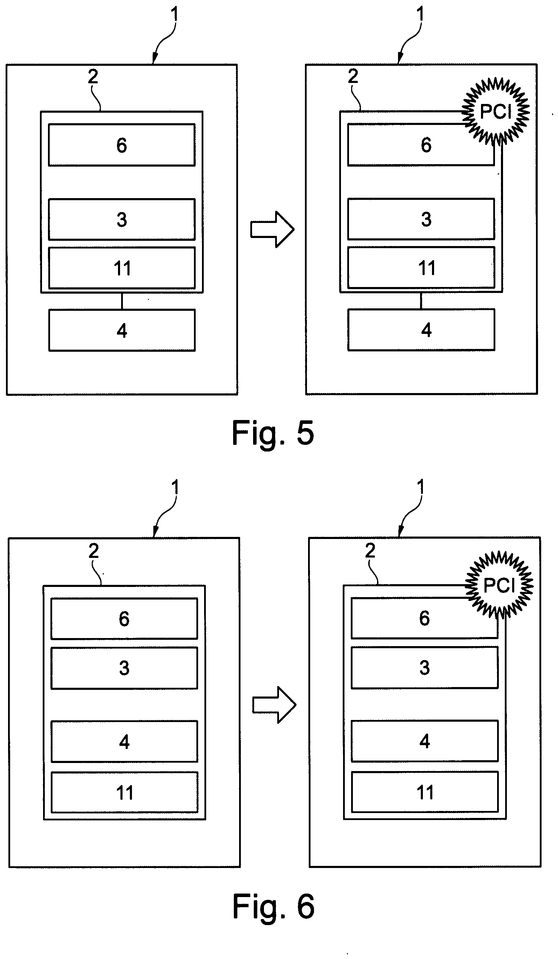

Fig. 5 zeigt ein geändertes Ausführungsbeispiel einer Stromladesäule 1. In der Stromladesäule 1 sind lediglich die wesentlichen Komponenten, nämlich das Payment-Terminal 2, das Touchpanel 6, der Ladecontroller 3, die Signatureinheit 11 und der Zähler 4 dargestellt.

Es sind jedoch sämtliche Komponenten, wie in Fig. 3 beschrieben, vorhanden. Darüber hinaus sind weitere nicht dargestellte Vorrichtungen, wie Funkvorrichtungen vorhanden.

Der Aufbau der Stromladesäule 1 gemäß Fig. 5 unterscheidet sich von dem Aufbau der Stromladesäule 1 der Fig. 4. Gemäß Fig. 5 ist zusätzlich zu dem Touchpanel 6 und dem Ladecontroller 3 die Zählersignatureinheit 11 in dem Payment-Terminal 2 integriert. Wie in dem rechten Teil der Fig. 5 dargestellt, sind durch die Prüfung und Zertifizierung des Payment-Terminals 2 gleichzeitig die Anforderungen für eine Zertifizierung der Komponenten Ladecontroller 3, Touchpanel 6 und Zählersignatureinheit 11 erfüllt.

Das bedeutet, dass sich der Prüf- und Zertifizierungsaufwand noch einmal reduziert, da durch die Prüfung und Zertifizierung des Payment-Terminals 2, beispielsweise durch eine PCI PTS-Zertifizierung, die Zählersignatureinheit 11 ebenfalls die Anforderungen der Zertifizierung der Zählersignatureinheit erfüllt.

Fig. 6 zeigt ein weiteres Ausführungsbeispiel einer Stromladesäule 1. Gemäß Fig. 6 ist in dem Payment-Terminal 2 das Touchpanel 6, der Ladecontroller 3, der Zähler 4 und die Zählersignatureinheit 11 integriert. Auch der Zähler 4 muss gegenüber kriminellen Angriffen hinreichend geschützt sein, das heißt, auch hier ist eine Prüfung und Zertifizierung erforderlich. Ist der Zähler 4, wie in Fig. 6 dargestellt, in dem Payment-Terminal 2 integriert, ist der Zähler 4 Bestandteil der Prüfung und Zertifizierung des Payment-Terminals 2, beispielsweise einer PCI PTS-Prüfung und Zertifizierung, so dass der Zähler 4 die Anforderungen der Zertifizierung des Zählers ebenfalls erfüllt.

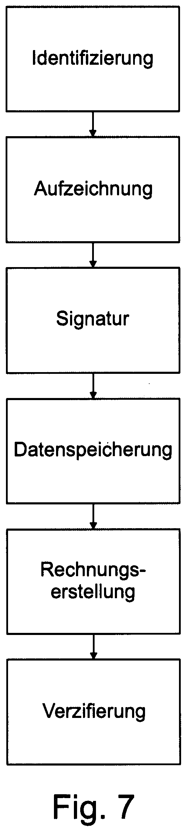

Fig. 7 zeigt eine schematische Darstellung eines Stromladevorganges.

Im ersten Schritt identifiziert sich ein Anwender an der Stromladesäule 1 und autorisiert sich damit für den Ladeprozess. Die Identifikation erfolgt über eine Karte eines offenen oder geschlossenen Zahlungssystems oder beispielsweise über ein digitales Endgerät wie zum Beispiel ein Smartphone.

Im zweiten Schritt erfolgt eine Aufzeichnung der Daten des Ladevorganges. Die Stromladesäule 1 erzeugt Daten von dem Stromladevorgang mit einer kalibrierten Messvorrichtung, beispielsweise einem Zähler 4 mit einer Zählersignatureinheit 11. Die Daten, die aufgezeichnet werden, sind beispielsweise der Beginn des Ladevorganges, Datum und Uhrzeit. Hierzu weist die Stromladesäule 1 beispielsweise eine nicht manipulierbare Echtzeituhr auf. Der Verbrauch, die Ladedauer, die User-ID und eine Identifikationsnummer der Stromladesäule können ebenfalls zusammen oder alternativ aufgezeichnet werden.

In einem dritten Schritt erfolgt eine kryptographische Verschlüsselung und/oder ein kryptographischer Hash der aufgezeichneten Daten mit einem privaten Schlüssel (Private Key). Die verschlüsselten Daten werden an einen Charge Point Operator übermittelt.

Im vierten Schritt erfolgt eine Datenspeicherung. Der Charge Point Operator muss garantieren, dass die Daten gesichert abgespeichert werden. Der Charge Point Operator stellt die signierten Messdaten einem E-Mobility-Service-Provider zur Verfügung.

Im fünften Schritt erstellt der E-Mobility-Service-Provider (EMSP) eine Rechnung. EMSP wendet den aktuellen Tarif auf die Transaktion an und speichert die erforderlichen Informationen. Die Rechnung kann außerdem einen Hinweis darauf erhalten, wie der Kunde die Authentizität und Integrität der Datensätze überprüfen kann.

Im letzten Schritt erfolgt eine Verifizierung. Im Streitfall kann der Kunde mit Hilfe einer Transparenz-Software und des öffentlichen Schlüssels die Authentizität und Integrität der signierten Datensätze überprüfen.

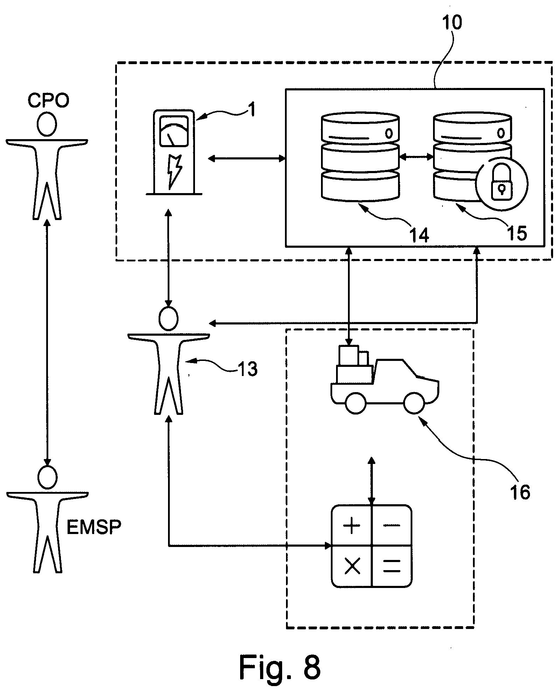

Fig. 8 stellt eine schematische Übersicht dar. An der Stromladesäule 1 lädt ein Anwender 13 sein Elektrofahrzeug. Die Stromladesäule 1 kommuniziert mit dem CPO-Backend 10, wie in Fig. 3 beschrieben. Das CPO-Backend 10 enthält einen ungesicherten Server 14 sowie einen gesicherten Server 15. Der Betreiber einer Ladeeinrichtung (CPO) ist ein Verwender von Messgeräten. Der Verwender der Messwerte des CPO ist der EMSP (E-Mobility-Service-Provider). Der E-Mobility-Service-Provider erstellt die Rechnung, wie in Fig. 7 beschrieben.

Das Payment-Terminal 1 sendet die Daten und Messwerte an das CPO-Backend 10, welches wiederum einen Teil der Daten und Messwerte an den EMSP weiterleitet.

Um unterschiedliche Vertragskonstellationen für die Abrechnung des Ladevorganges zu überprüfen ist ein Roaming Backend 16 vorgesehen. Die verschiedenen Vertragskonstellationen können sich auf verschiedene Anbieter beziehen.

### Bezugszahlen

- 1: Stromladesäule
- 2: Payment-Terminal
- 3: Ladecontroller
- 4: Zähler
- 5: Display
- 6: Touchpanel
- 7: Payment-Backend
- 8: Karte, geschlossenes oder offenes Zahlungssystem
- 9: Ladekabel
- 10: Ladeinfrastruktur-Backend
- 11: Signatureinheit des Zählers 4
- 12: Mikroprozessor
- 13: Anwender
- 14: ungesicherter Server
- 15: gesicherte Server
- 16: Roaming Backend

## Patentansprüche

1. Stromladesäule für Elektrofahrzeuge, wobei die Stromladesäule ein Touchpanel, ein Payment-Terminal, einen Ladecontroller und einen Zähler aufweist,
**dadurch gekennzeichnet,**
- **dass** der Ladecontroller (3) und das Touchpanel (6) in dem Payment-Terminal (2) angeordnet sind,
- **dass** das Touchpanel (6), das Payment-Terminal (2) und der Ladecontroller (3) einen gemeinsamen Mikroprozessor (12) aufweisen,
- **dass** das Payment-Terminal (2) mit dem Ladecontroller (3) und dem Touchpanel (6) als ein durch einen öffentlich zugänglichen Prüfstandard geprüftes Payment-Terminal ausgebildet ist.

2. Stromladesäule nach Anspruch 1, **dadurch gekennzeichnet, dass** der Ladecontroller (3) und das Touchpanel (6) und das Payment-Terminal (2) als eine bauliche Einheit ausgebildet sind.

3. Stromladesäule nach Anspruch 2, **dadurch gekennzeichnet, dass** der Ladecontroller (3) und das Touchpanel (6) und das Payment-Terminal (2) als eine gemeinsame Elektronikeinheit ausgebildet sind.

4. Stromladesäule nach einem der vorhergehenden Ansprüche, **dadurch gekennzeichnet, dass** das Payment-Terminal (2) mit dem Ladecontroller (3) und dem Touchpanel (6) als ein nach PCI PTS (Payment Card Industry PIN Transaction Security) oder einem länderspezifischen Standard geprüftes und zertifiziertes Payment-Terminal mit dem Ladecontroller (3) und dem Touchpanel (6) ausgebildet ist.

5. Stromladesäule nach einem der vorhergehenden Ansprüche, **dadurch gekennzeichnet, dass** die Stromladesäule (1) eine Zählersignatureinheit (11) aufweist.

6. Stromladesäule nach einem der vorhergehenden Ansprüche, **dadurch gekennzeichnet, dass** der Zähler (4) in dem Payment-Terminal (2) angeordnet ist.

7. Stromladesäule nach Anspruch 6, **dadurch gekennzeichnet, dass** die Zählersignatureinheit (11) in dem Payment-Terminal (2) angeordnet ist.

8. Stromladesäule nach einem der Ansprüche 5 bis 7, **dadurch gekennzeichnet, dass** die Zählersignatureinheit (11) in der Elektronikeinheit angeordnet ist.

9. Stromladesäule nach Anspruch 8, **dadurch gekennzeichnet, dass** der Zähler (4) in der Elektronikeinheit angeordnet ist.

10. Stromladesäule nach einem der vorhergehenden Ansprüche, **dadurch gekennzeichnet, dass** der Ladecontroller (3) als geeichter Ladecontroller (3) ausgebildet ist.

11. Stromladesäule nach einem der vorhergehenden Ansprüche, **dadurch gekennzeichnet, dass** die Stromladesäule (1) einen RFID-Reader aufweist.

12. Stromladesäule nach einem der vorhergehenden Ansprüche, **dadurch gekennzeichnet, dass** die Stromladesäule (1) eine Vorrichtung zur Aufzeichnung von Daten und/oder einen Speicher und/oder eine Echtzeituhr aufweist.

13. Stromladesäule nach einem der vorhergehenden Ansprüche, **dadurch gekennzeichnet, dass** ein Hardwarebeschleuniger vorgesehen ist.

14. Stromladesäule nach den Ansprüchen 5 bis 13, **dadurch gekennzeichnet, dass** zwischen dem Zähler (4) und der Zählersignatureinheit (11) eine gesicherte Verbindung ausgebildet ist.
